Europäisches Patentamt

European Patent Office

Office européen des brevets

(19)

(11) Veröffentlichungsnummer: **0 499 685 A1**

# (12) EUROPÄISCHE PATENTANMELDUNG

(21) Anmeldenummer: **91114220.6**

(22) Anmeldetag: **24.08.91**

(51) Int. Cl.5: **B24B 19/06**, B24B 41/00, B23Q 7/06

(30) Priorität: **16.02.91 DE 4104819**

(43) Veröffentlichungstag der Anmeldung:
**26.08.92 Patentblatt 92/35**

(84) Benannte Vertragsstaaten:
**CH FR GB IT LI NL SE**

(71) Anmelder: **ERNST THIELENHAUS KG**
**Schwesterstrasse 50**
**W-5600 Wuppertal 2(DE)**

(72) Erfinder: **Schwär, Rudolf**
**Dellbusch 306**
**W-5600 Wuppertal 2(DE)**

(74) Vertreter: **Andrejewski, Walter, Dr. et al**
**Patentanwälte Andrejewski, Honke & Partner**
**Postfach 10 02 54 Theaterplatz 3**
**W-4300 Essen 1(DE)**

(54) **Schleifmaschine, insbes. Feinschleifmaschine, für ringförmige Werkstücke.**

(57) Schleifmaschine, insbes. Feinschleifmaschine, für ringförmige, außenumfangsseitig oder innenumfangsseitig zu bearbeitende Werkstücke, insbes. Kugellagerringe, in zumindest zwei Bearbeitungsstationen mit den Bearbeitungsstationen zugeordneten Werkstückaufnahmen in den Bearbeitungsstationen und mit einer Beschick- und Entleereinrichtung, die einen Zuführschacht und einen Abführschacht besitzt.

Die Beschick- und Entleereinrichtung weist ein Transportelement mit einer Mehrzahl von Transportaufnahmen für die Werkstücke auf. Die Werkstücke sind von dem Transportelement in die Bearbeitungsstationen einführbar. Die Bearbeitungsstationen sind längs einer Geraden äquidistant angeordnet. Das Transportelement ist als gerade Transportleiste mit zur Transportleistenoberseite randoffenen Transportaufnahmen für die Werkstücke ausgeführt, die den Bearbeitungsstationen und den Werkstückaufnahmen zugeordnet sind. Die Transportleiste ist an einen Transportleistenbeweger angeschlossen, mit dem die Transportleiste aus einer ersten Stellung über eine bogenförmige Bahn in der Transportleistenebene in eine zweite Stellung und während des Schleifvorganges der Werkstücke in den Bearbeitungsstationen aus der zweiten Stellung in die erste zurückbewegbar ist. In der ersten Stellung stehen die Transportaufnahmen der Transportleiste dem Zuführschacht und allen Bearbeitungsstationen bis auf die letzte vor. In der zweiten Stellung stehen die Transportaufnahmen der Transportleiste allen Bearbeitungsstationen vor, jedoch nicht dem Zuführschacht. Aus der letzten Bearbeitungsstation ist das bearbeitete Werkstück an den Abführschacht abwerfbar.

Fig. 4

EP 0 499 685 A1

Die Erfindung betrifft eine Schleifmaschine, insbes. eine Feinschleifmaschine, für ringförmige, außenumfangsseitig oder innenumfangsseitig zu bearbeitende Werkstücke, insbes. Kugellagerringe, in zumindest zwei Bearbeitungsstationen, - mit den Bearbeitungsstationen zugeordneten Werkzeughaltern und Werkzeugen sowie mit Werkstückaufnahmen, die jeweils eine in der Schleifmaschine ortsfest gelagerte drehangetriebene Mitnehmerspindel sowie eine Widerlagereinrichtung für das Werkstück aufweisen, und mit einer Beschick- und Entleereinrichtung, die einen Zuführschacht und einen Abführschacht besitzt und die Werkstücke den Bearbeitungsstationen zuführt sowie aus diesen abführt, wobei die Beschick- und Entleereinrichtung ein Transportelement mit einer Mehrzahl von Transportaufnahmen für die Werkstücke aufweist, die mit dem Zuführschacht und dem Abführschacht korrespondieren, und wobei die Werkstücke von dem Transportelement in die Werkstückaufnahme einführbar sind. - Bei den Bearbeitungsstationen kann es sich z. B. um eine für eine Vorschleifbearbeitung und eine für eine Fertigschleifbearbeitung handeln. Im Rahmen der Erfindung können die Werkstückaufnahmen grundsätzlich beliebig gestaltet sein. Dabei kann den Baulehren gefolgt werden, die für die Gestaltung der Werkstückaufnahmen in Schleifmaschinen des eingangs beschriebenen Aufbaus und der eingangs beschriebenen Zweckbestimmung üblich sind. Insbesondere liegt es im Rahmen der Erfindung, mit Werkstückaufnahmen zu arbeiten, die für eine hydrodynamische Zentrierung eingerichtet sind. Darunter versteht man Werkstückaufnahmen, in denen die rotierenden ringförmigen Werkstücke umfangsseitig von einem geeigneten hydraulischen Medium umgeben sind. Für die Bearbeitung der Laufflächen von Kugellagerinnenringen können solche Werkstückaufnahmen im Rahmen der Erfindung so aufgebaut und ausgelegt sowie eingerichtet sein, wie es sich aus der DE 17 52 520 oder der DE 19 37 802 ergibt. Für die Bearbeitung der Laufflächen von Kugellageraußenringen kann die Werkstückaufnahme im Rahmen der Erfindung so ausgelegt und eingerichtet sein, wie es der DE 17 52 064 entspricht. Es versteht sich, daß die Werkstückaufnahme auch mit einem Schuhsystem ausgerüstet sein kann.

Bei der bekannten Schleifmaschine, von der die Erfindung ausgeht (DE 17 52 520, DE 19 37 802, DE 17 52 064), ist das Transportelement als eine Magazinscheibe ausgeführt, die um ihre Achse schrittweise bewegbar ist und deren Transportaufnahmen entsprechend auf einem Kreis angeordnet sind und eine Kreisbahn beschreiben, die gleichsam an dem Zuführschacht und dem Abführschacht sowie an den Bearbeitungsstationen vorbeikommt. Das ist aufwendig und in bezug auf die erreichbaren Taktzeiten und Umrüstzeiten verbesserungsbedürftig. Das ist insbes. verbesserungsbedürftig, wenn die Schleifmaschine für ringförmige Werkstücke unterschiedlichen Durchmessers arbeiten soll und nach Maßgabe der Größe der Lose dieser Werkstücke unterschiedlichen Durchmessers umzurüsten ist. Hier sind bei der bekannten Ausführungsform verhältnismäßig lange Rüstzeiten erforderlich, die die Verfügbarkeit der Schleifmaschine beeinträchtigen. Die bekannte Schleifmaschine ist insoweit für eine sogenannte flexible Fertigung, die kurze Umstellzeiten und Rüstzeiten verlangt, wenig geeignet.

Der Erfindung liegt die Aufgabe zugrunde, eine Schleifmaschine des eingangs beschriebenen Aufbaus zu vereinfachen, bezüglich der Taktzeiten und der Verfügbarkeit zu verbessern sowie dadurch insbes. für eine flexible Fertigung geeignet zu machen.

Zur Lösung dieser Aufgabe lehrt die Erfindung, daß die Bearbeitungsstationen längs einer Geraden äquidistant angeordnet sind, daß das Transportelement als gerade Transportleiste mit zur Transportleistenoberseite randoffenen Transportaufnahmen für die Werkstücke ausgeführt ist, die den Werkstückaufnahmen in den Bearbeitungsstationen zugeordnet sind, daß die Transportleiste an einen Transportleistenbeweger angeschlossen ist, mit dem die Transportleiste aus einer ersten Stellung über eine bogenförmige Bahn in der Transportleistenebene in eine zweite Stellung und während des Schleifvorganges der Werkstücke in den Bearbeitungsstationen aus der zweiten Stellung in die erste zurückbewegbar ist, wobei in der ersten Stellung die Transportaufnahmen der Transportleiste dem Zuführschacht und allen Bearbeitungsstationen bis auf die letzte vorstehen, wobei in der zweiten Stellung die Transportaufnahmen der Transportleiste allen Bearbeitungsstationen vorstehen, jedoch nicht dem Zuführschacht, und wobei aus der letzten Bearbeitungsstation das bearbeitete Werkstück an den Abführschacht abwerfbar ist. - Es versteht sich, daß in der ersten Stellung und in der zweiten Stellung die Werkstückaufnahmen in den Bearbeitungsstationen die Werkstücke, die sich in den Transportaufnahmen befinden, aufnehmen können, während die Transportleiste mit den Transportaufnahmen gleichsam nach unten wegbewegbar ist, wenn die Werkstückaufnahmen die Werkstücke aufgenommen haben. Aus diesem Grunde ist die Transportleiste mit zur Transportleistenoberseite hin randoffenen Transportaufnahmen für die Werkstücke ausgeführt. Die Transportaufnahmen sind zweckmäßigerweise der Kreisform der Werkstücke halbkreisförmig angepaßt, jedoch so, daß auf einfache Weise die Einführung der Werkstücke in die Transportaufnahmen und das Herausnehmen der Werkstücke aus den Transportaufnahmen möglich ist. Das ist mit Werkstückaufnahmen in den Bearbeitungsstationen, die jeweils eine in der Schleifmaschine ortsfest gelagerte drehangetriebene Mitnehmerspindel sowie eine Widerlagereinrichtung für das Werkstück aufweisen und mit entsprechenden Werkzeugen ausgerüstet sind, wie es zum Stand der Technik gehört, ohne weiteres möglich.

Bei der erfindungsgemäßen Schleifmaschine kann die beschriebene bogenförmige Bewegung der Transportleiste auf verschiedene Weise verwirklicht werden. Eine bevorzugte Ausführungsform der Erfindung ist in diesem Zusammenhang dadurch gekennzeichnet, daß der Transportleistenbeweger ein Schlittenbauteil aufweist, welches auf Führungsstangen oder Führungsschienen nach Maßgabe des Abstandes der Bearbeitungsstationen aus einer ersten Stellung in eine zweite Stellung und zurückbewegbar ist, und daß in dem Schlittenbauteil die Transportleiste mit Hilfe von zumindest einer Hubstange, die an eine Kurbel angeschlossen ist, nach Maßgabe ihrer bogenförmigen Bahn zwischen den beiden Stellungen der Transportleiste bewegbar ist. Um die Werkstücke auf einfache Weise der Schleifmaschine zu- und abzuführen, empfiehlt es sich, die Anordnung so zu treffen, daß die Gerade, längs der die Bearbeitungsstationen angeordnet sind, schräg abwärts weist und daß der Zuführschacht und der Abführschacht kinematisch als schiefe Ebene eingerichtet sind.

Im folgenden werden die Erfindung, die Details der kinematischen Zusammenhänge und die erreichten Vorteile ausführlicher erläutert. Es zeigen in schematischer Darstellung

Fig. 1  mit den Teilfiguren a, b und c die Transportleiste einer erfindungsgemäßen Schleifmaschine in verschiedenen Funktionsstellungen,

Fig. 2  einen Ausschnitt aus einer erfindungsgemäßen Schleifmaschine mit Zuführschacht, Abführschacht und Transportleiste in verschiedenen Funktionsstellungen,

Fig. 3  die Seitenansicht einer erfindungsgemäßen Schleifmaschine,

Fig. 4  einen Ausschnitt aus einer erfindungsgemäßen Schleifmaschine entsprechend der Fig. 2 mit Transportleistenbeweger und konstruktiven Details,

Fig. 5  in einem Schnitt in Richtung A-A durch den Gegenstand nach Fig. 2 eine Bearbeitungsstation mit Werkzeughalter und Werkzeugen sowie mit Werkstückaufnahmen und

Fig. 6  eine andere Ausführungsform des Gegenstandes der Fig. 5.

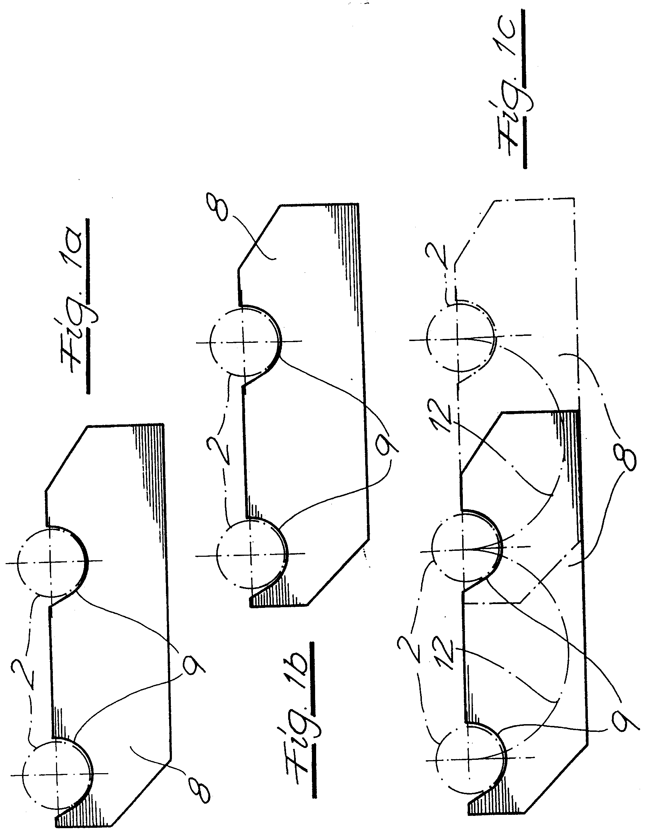

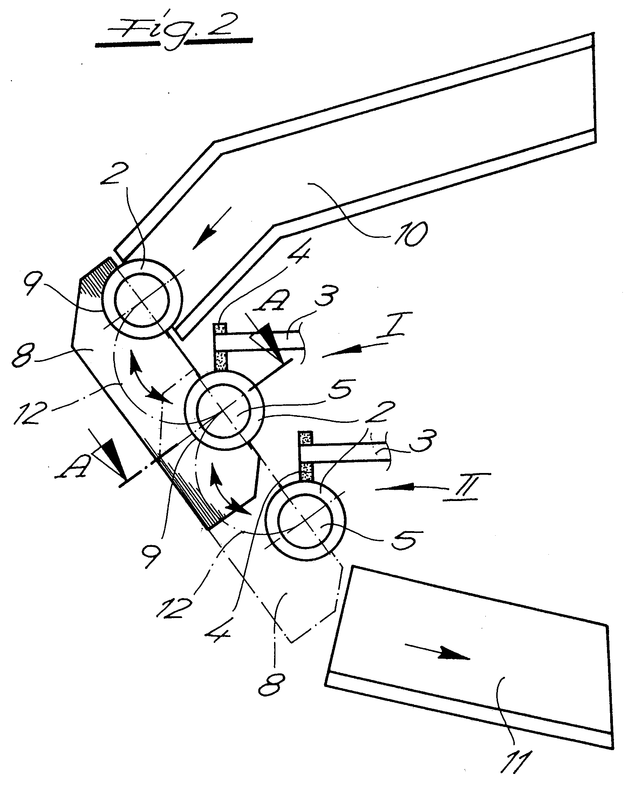

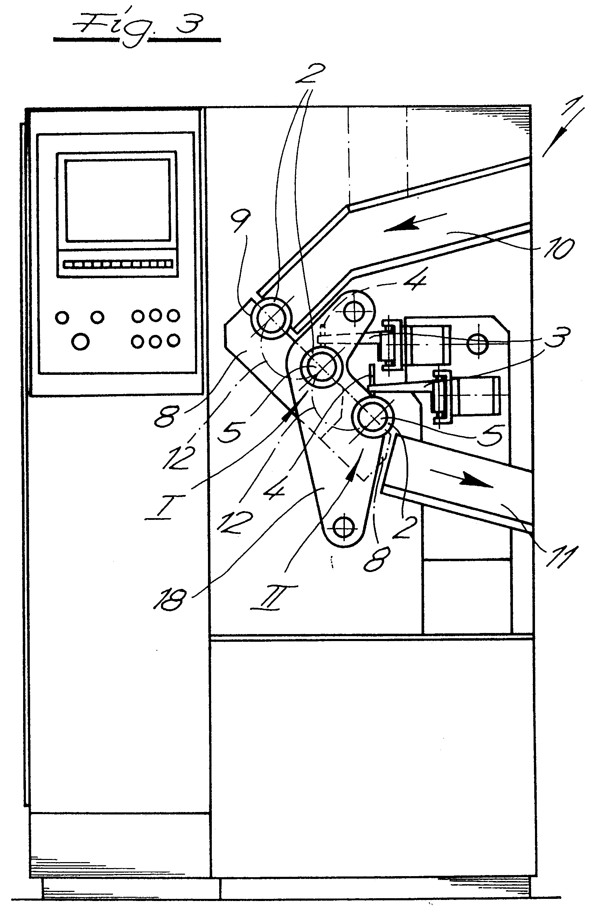

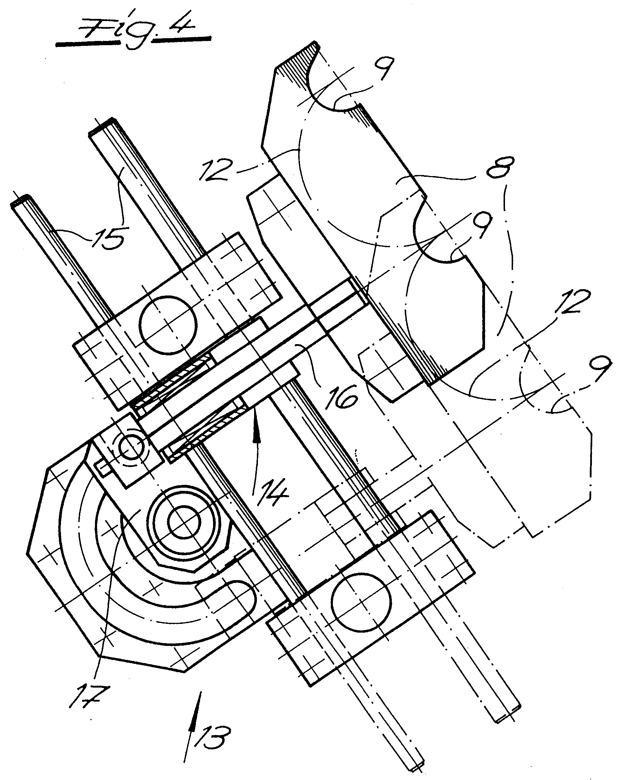

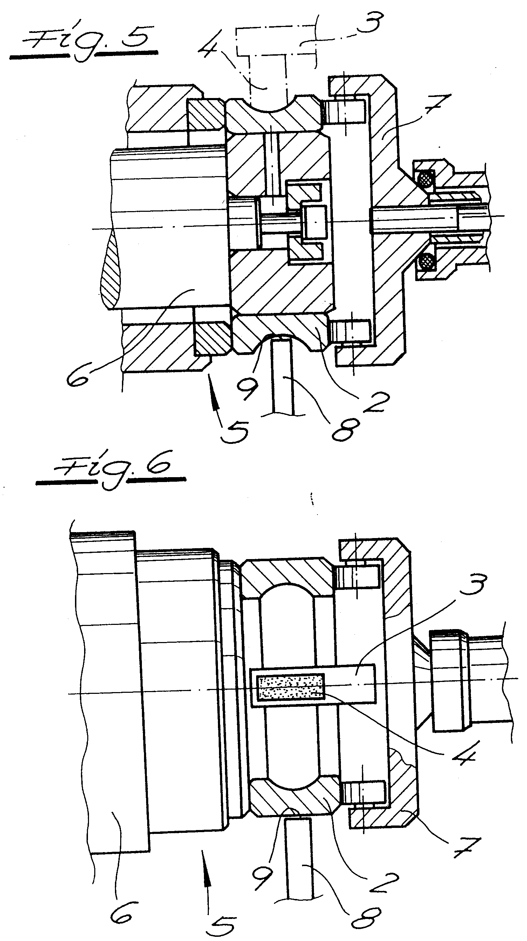

Betrachtet man zunächst die Fig. 2, 3 sowie 5 und 6, so erkennt man eine erfindungsgemäße Schleifmaschine 1, die als Feinschleifmaschine ausgeführt und die für die Schleifbearbeitung von ringförmigen, außenumfangsseitig oder innenumfangsseitig zu bearbeitenden Werkstücken 2 eingerichtet ist. Bei diesen Werkstücken 2 mag es sich um Kugellagerringe handeln, wie auch das Ausführungsbeispiel andeutet. Die Schleifmaschine 1 hat im Ausführungsbeispiel zwei Bearbeitungsstationen I und II. Die Bearbeitungsstationen I, II sind mit Werkzeughaltern 3 und Werkzeugen 4 sowie mit Werkstückaufnahmen 5 ausgerüstet. Zu den Werkstückaufnahmen 5 wird auf die Fig. 5 und 6 verwiesen. Fig. 5 zeigt eine Werkstückaufnahme 5 für den Innenring eines Kugellagers, Fig. 6 für den Außenring. Es gehört dazu jeweils eine in der Schleifmaschine 1 ortsfest gelagerte drehangetriebene Mitnehmerspindel 6 und eine Widerlagereinrichtung 7 für das Werkstück 2.

Die Beschick- und Entleereinrichtung besitzt ein Transportelement in Form einer Transportleiste 8 mit einer Mehrzahl von Transportaufnahmen 9 für die Werkstücke 2. Die Werkstücke 2 werden in die Bearbeitungsstationen I, II eingeführt. Sie werden dabei am Zuführschacht 10 aufgenommen und zum Abführschacht 11 hin abgegeben. Im Ausführungsbeispiel besitzt die Schleifmaschine eine Bearbeitungsstation I für das Vorschleifen, eine zweite II für das Fertigschleifen. Die Transportleiste 8 ist mit zwei äquidistant längs einer Geraden angeordneten Transportaufnahmen 9 ausgeführt. Entsprechend äquidistant und längs einer Geraden sind die beiden Bearbeitungsstationen I, II und darin die Werkstückaufnahmen 5 angeordnet.

Zur Erläuterung der Kinematik der Zusammenhänge wird auf die Fig. 1 mit ihren Teilfiguren a), b) und c) verwiesen. Dabei wurde in der Fig. 1 die Transportleiste 8 nicht schräg nach unten weisend angeordnet, sondern zur Erleichterung des Verständnisses waagerecht. Man erkennt in der Teilfigur a) der Fig. 1 die erste Stellung, die auch als Ausgangsstellung bezeichnet werden kann, und in der Teilfigur b) die zweite Stellung. Diese könnte auch als Abwerfstellung für ein bearbeitetes Werkstück 1 bezeichnet werden. Die Transportleiste ist aus der ersten Stellung, bei der ein Werkstück 1 aus dem Zuführschacht 10 aufnehmbar ist, in die zweite Stellung bewegbar. Die Teilfiguren a) und b) der Fig. 1 zeigen diese Positionen untereinander. In der Teilfigur c) erkennt man die tatsächliche Zuordnung der Positionen zueinander, die insoweit auf einer Geraden liegen. Die Bewegungsbahn der Transportleiste 8 ist eine bogenförmige Bahn 12, die in der Fig. 1, Teilfigur c) aber auch in der Fig. 4 deutlich dargestellt ist. Auf diese Weise werden die Bearbeitungsstationen I, II untereinander und wird die erste Bearbeitungsstation I mit dem Zuführschacht 10 kinematisch verbunden. Der Abführschacht 11 schließt demgegenüber an die letzte Bearbeitungsstation II an, wozu insbes. auf die Fig. 2 und 3 verwiesen wird. Vergleicht man die Fig. 1, 2 und 3, so erkennt man, daß von der Transportleiste 8 in der ersten Stellung mit der zuführschachtseitigen Transportaufnahme 9 aus dem Zuführschacht ein Werkstück 2 aufnehmbar ist und daß außerdem in dieser Stellung mit der abführschachtseitigen Transportaufnahme 9 aus der ersten Bearbeitungsstation I ein Werkstück 2 aufnehmbar ist. Die Kinematik ist so verwirklicht, daß von der Transportleiste 8 in der zweiten Stellung das in der ersten Stellung aus dem Zuführschacht 10 aufgenommene Werkstück 2 in die erste Bearbeitungsstation I abgebbar und das aus der ersten Bearbeitungsstation I aufgenommene Werkstück 2 in die zweite Bearbeitungsstation II abgebbar ist. Die Transportleiste 8 ist, wenn die Werkstücke 2 von den Werkstückaufnahmen 9 in den Bearbeitungsstationen I, II aufgenommen sind, ohne die Werkstücke 2 aus der zweiten Stellung in die erste Stellung mit leeren Transportaufnahmen 9 zurückbewegbar. Das Werkstück 2 aus der zweiten Bearbeitungsstation II ist, wie bereits erwähnt, an den Abführschacht 11 abwerfbar. Jedes Werkstück 1 gelangt also in der ersten Stellung der Transportleiste 8 in die zuführschachtseitige Transportaufnahme 9 und wird in der zweiten Stellung der Transportleiste 8 aus dieser zuführschachtseitigen Transportaufnahme 9 in die erste Bearbeitungsstation I übergeben, wozu mit den Werkstückaufnahmen 5 der Fig. 5 oder 6 gearbeitet wird. In der zweiten Bearbeitungsstation II befindet sich bei dieser Betrachtung noch kein Werkstück. Die erfindungsgemäße Schleifmaschine 1 ist also in diesem Betriebszustand noch nicht vollständig beschickt. Die Transportleiste 8 wird nunmehr aus der zweiten Stellung in die erste Stellung zurückbewegt. Sie nimmt hier aus dem Zuführschacht 10 ein weiteres zu bearbeitendes Werkstück 2 auf, während die abführschachtseitige Transportaufnahme 9 der Transportleiste 8 in dieser ersten Stellung aus der ersten Bearbeitungsstation I das Werkstück 2 aufnehmen kann, welches inzwischen in dieser Bearbeitungsstation I bearbeitet wurde. Wird nunmehr die Transportleiste 8 in die zweite Stellung bewegt, so befindet sich in der zuführschachtseitigen Transportaufnahme 9 ein zu bearbeitendes Werkstück 2 und in der abführschachtseitigen Transportaufnahme 9 der Transportleiste 8 ein Werkstück 2, welches in der ersten Bearbeitungsstation I bereits bearbeitet worden ist. Es wird bei der beschriebenen Bewegung entsprechend der bogenförmigen Bahn 12 in den Bereich der zweiten Bearbeitungsstation II verbracht und kann dort von der Werkstückaufnahme 5 aufgenommen werden. Das bedeutet, daß sich in der ersten Bearbeitungsstation I wieder ein zu bearbeitendes Werkstück 2 befindet und in der zweiten Bearbeitungsstation II ein Werkstück 2, welches in der ersten Bearbeitungsstation I bereits bearbeitet worden ist und in der zweiten Bearbeitungsstation II fertig bearbeitet wird. Inzwischen kann die Transportleiste 8 wieder in die erste Stellung zurückbewegt werden und das Transport- und Bearbeitungsspiel wiederholt sich. Aus der letzten Bearbeitungsstation II wird das fertigbearbeitete Werkstück 2 in den Abführschacht 11 abgeworfen. Die Werkstückaufnahme 5 der Bearbeitungsstation II wird dazu gleichsam geöffnet, so daß das fertigbearbeitete Werkstück 2 aus der zweiten Bearbeitungsstation II herausfallen kann, weil sich die Transportleiste 8, die in den Fig. 5 und 6 unter den Werkstücken 2 erkennbar ist, wieder in der ersten Stellung befindet und das Werkstück 2 in der zweiten Bearbeitungsstation II folglich nicht mehr unterfaßt.

Vorstehend sind die Zusammenhänge für die dargestellte Werkzeugmaschine 1 mit zwei Bearbeitungsstationen I, II erläutert worden. Die Erfindung ist jedoch nicht auf die Arbeitsweise mit zwei Bearbeitungsstationen I, II beschränkt. Es kann auch mit mehr als zwei Bearbeitungsstationen gearbeitet werden. Die schon beschriebenen Figuren machen deutlich, daß dazu die Bearbeitungsstationen, wie die beiden Bearbeitungsstationen I, II des Ausführungsbeispiels, längs einer Geraden äquidistant angeordnet werden müssen, daß das Transportelement auch in diesem Falle als gerade Transportleiste 8 mit zur Transportleistenoberseite hin randoffenen Transportaufnahmen 9 für die Werkstücke auszuführen ist, die den Bearbeitungsstationen und den Werkstückaufnahmen 5, wie am Beispiel der Maschine mit zwei Bearbeitungsstationen I, II beschrieben, zugeordnet sind.

In allen Fällen ist die Transportleiste 8 an einen Transportleistenbeweger 13 anzuschließen, mit dem die Transportleiste 8 aus einer ersten Stellung über eine bogenförmige Bahn in der Transportleistenebene in eine zweite Stellung und während des Schleifvorganges der Werkstücke 2 in den Bearbeitungsstationen, z. B. I, II, aus der zweiten Stellung in die erste Stellung zurückbewegbar ist. Stets stehen in der ersten Stellung die Transportaufnahmen 9 der Transportleiste 8 dem Zuführschacht 10 und allen Bearbeitungsstationen bis auf die letzte vor, während in der zweiten Stellung die Transportaufnahmen 9 allen Bearbeitungsstationen vorstehen, jedoch nicht dem Zuführschacht 10. Das Abwerfen der fertigbearbeiteten Werkstücke 2 aus der letzten Bearbeitungsstation erfolgt dann wie beschrieben.

In der Fig. 4 erkennt man, wie die beschriebene Kinematik der Transportleiste 8 auf einfache Weise zu verwirklichen ist. Man erkennt, daß der Transportleistenbeweger 13 ein Schlittenbauteil 14 aufweist, das auf Führungsstangen 15 oder Führungsschienen nach Maßgabe des Abstandes der Bearbeitungsstationen, z. B. I, II, aus einer ersten Stellung in eine zweite Stellung und zurückbewegbar ist. In dem Schlittenbauteil 14 ist die Transportleiste 8 mit Hilfe von im Ausführungsbeispiel einer Hubstange 16, die an eine Kurbel 17 angeschlossen ist, nach Maßgabe ihrer bogenförmigen Bewegung entsprechend der Bahn 12 zwischen den beiden Stellungen der Transportleiste 8 bewegbar. Im Ausführungsbeispiel und nach bevorzugter Ausführungsform der Erfindung erstreckt sich die Gerade, längs der die Bearbeitungsstationen I, II angeordnet sind, schräg abwärts. Der Zuführschacht 10 und der Abführschacht 11 sind kinematisch als schiefe Ebene eingerichtet, so daß insoweit besondere Transporteinrichtungen oder -beweger nicht erforderlich sind.

Das Ausführungsbeispiel macht deutlich, daß bei der erfindungsgemäßen Schleifmaschine 1 die Beschickung und die Entleerung der einzelnen Bearbeitungsstationen I, II mit ihren Werkstückaufnahmen 5 wesentlich einfacher erfolgt als bei den eingangs bekannten Schleifmaschinen, die mit Magazinscheiben arbeiten. Die Transportleiste 8 kann leicht ausgewechselt werden. Dazu wird auf die Fig. 4 verwiesen. Es versteht sich, daß die Transportleiste 8 gleichsam zwischen Abdeck- oder Führungsblechen 18 arbeitet, von denen eines in der Fig. 3 erkennbar ist. - Es versteht sich, daß die Transportrichtung der Werkstücke 2 variiert werden kann. Betrachtet man die Fig. 2, so erkennt man, daß sie von rechts oben nach rechts unten erfolgt. Der Transport der Werkstücke 2 könnte aber auch gleichsam invers von links oben nach links unten erfolgen, wie man sich verdeutlicht, wenn man die Fig. 2 um eine vertikale Achse umklappt. Man könnte die Vorrichtung gemäß Fig. 2 aber auch um 90° nach rechts drehen und den Abführschacht nach unten weisend anordnen.

**Patentansprüche**

1. Schleifmaschine, insbes. Feinschleifmaschine, für ringförmige, außenumfangsseitig oder innenumfangsseitig zu bearbeitende Werkstücke, insbes. Kugellagerringe, in zumindest zwei Bearbeitungsstationen,

   mit den Bearbeitungsstationen zugeordneten Werkzeughaltern und Werkzeugen sowie mit Werkstückaufnahmen in den Bearbeitungsstationen, die jeweils eine in der Schleifmaschine ortsfest gelagerte drehangetriebene Mitnehmerspindel sowie eine Widerlagereinrichtung für das Werkstück aufweisen, und mit einer Beschick- und Entleereinrichtung, die einen Zuführschacht und einen Abführschacht besitzt,

   wobei die Beschick- und Entleereinrichtung ein Transportelement mit einer Mehrzahl von Transportaufnahmen für die Werkstücke aufweist und wobei die Werkstücke von dem Transportelement in die Bearbeitungsstationen einführbar sind, **dadurch gekennzeichnet,** daß die Bearbeitungsstationen (I, II) längs einer Geraden äquidistant angeordnet sind,

   daß das Transportelement als gerade Transportleiste (8) mit zur Transportleistenoberseite randoffenen Transportaufnahmen (9) für die Werkstücke (2) ausgeführt ist, die den Werkstückaufnahmen (5) der Bearbeitungsstationen (I, II) zugeordnet sind,

   daß die Transportleiste (8) an einen Transportleistenbeweger (13) angeschlossen ist, mit dem die Transportleiste (8) aus einer ersten Stellung über eine bogenförmige Bahn (12) in der Transportleistenebene in eine zweite Stellung und während des Schleifvorganges der Werkstücke (2) in den Bearbeitungsstationen (I, II) aus der zweiten Stellung in die erste zurückbewegbar ist,

   wobei in der ersten Stellung die Transportaufnahmen (9) der Transportleiste (8) dem Zuführschacht (10) und allen Bearbeitungsstationen bis auf die letzte vorstehen, wobei in der zweiten Stellung die Transportaufnahmen (9) der Transportleiste (8) allen Bearbeitungsstationen (I, II) vorstehen, jedoch nicht dem Zuführschacht (10), und wobei aus der letzten Bearbeitungsstation (II) das bearbeitete Werkstück (2) an den Abführschacht (11) abwerfbar ist.

2. Schleifmaschine nach Anspruch 1, dadurch gekennzeichnet, daß der Transportleistenbeweger (13) ein Schlittenbauteil (14) aufweist, welches auf Führungsstangen (15) oder Führungsschienen nach Maßgabe des Abstandes der Bearbeitungsstationen (I, II) aus einer ersten Stellung in eine zweite Stellung und zurückbewegbar ist, und daß in dem Schlittenbauteil (14) die Transportleiste (8) mit Hilfe von zumindest einer Hubstange (16), die an eine Kurbel (17) angeschlossen ist, nach Maßgabe ihrer bogenförmigen Bahn (12) zwischen den beiden Stellungen der Transportleiste (8) bewegbar ist.

3. Schleifmaschine nach einem der Ansprüche 1 oder 2, dadurch gekennzeichnet, daß die Gerade, längs der die Bearbeitungsstationen (I, II) angeordnet sind, abwärts weist und daß der Zuführschacht (10) und der Abführschacht (11) kinematisch als schiefe Ebene eingerichtet sind.

Fig. 1a

Fig. 1b

Fig. 1c

*Fig.2*

*Fig. 3*

Fig.4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-2 814 374 (FAMIR INTERNATIONAL S.P.A.) | 1,2 | B24B19/06 |
| Y | * Seite 8 - Seite 12; Abbildung 2 * | 1,2 | B24B41/00 |
| A | * Abbildung 2 * | 3 | B23Q7/06 |
| | --- | | |
| Y | PATENT ABSTRACTS OF JAPAN vol. 7, no. 116 (M-216)(1261) 20. Mai 1983 & JP-A-58 034 747 ( TOYO KOGYO K.K. ) 1. März 1983 * Zusammenfassung * | 1,2 | |
| | ----- | | |

RECHERCHIERTE SACHGEBIETE (Int. Cl.5 )

B24B
B23Q

Der vorliegende Recherchenbericht wurde für alle Patentansprüche erstellt

| Recherchenort | Abschlußdatum der Recherche | Prüfer |
|---|---|---|
| DEN HAAG | 09 JUNI 1992 | ESCHBACH D.P.M. |